# EUROPEAN PATENT APPLICATION

(11) **EP 2 781 908 A1**
(43) Date of publication of application: **24.09.2014**
(21) Application number: 12850549.2
(22) Date of filing: 17.08.2012
(51) Int. Cl.: G01N 21/35, G01N 21/01

(54) **PERIODIC STRUCTURE AND MEASUREMENT METHOD EMPLOYING SAME**

(30) Priority: 18.11.2011 JP 2011252405
(71) Applicant: Murata Manufacturing Co., Ltd., Kyoto 617-8555 (JP)
(72) Inventor: KAMBA, Seiji, Nagaokakyo-shi Kyoto 617-8555 (JP); TAKIGAWA, Kazuhiro, Nagaokakyo-shi Kyoto 617-8555 (JP); KONDO, Takashi, Nagaokakyo-shi Kyoto 617-8555 (JP); TANAKA, Koji, Nagaokakyo-shi Kyoto 617-8555 (JP)
(74) Representative: Zinnecker, Armin
(86) International application number: PCT/JP2012/070878
(87) International publication number: WO 2013/073242

(57) **Abstract**

According to the present invention, a plate-shaped periodic structure includes at least two aperture portions extending through the periodic structure in a direction perpendicular to a main surface of the periodic structure and periodically arranged in at least one direction along the main surface. Each of the aperture portions has a shape that is not mirror-symmetric with respect to an imaginary plane that is a plane perpendicular to the main surface. Each of the aperture portions includes a constricted portion at which a gap distance of the aperture portion is partially small, the gap distance being a width in a direction parallel to a line of intersection of the main surface and the imaginary plane.

## Description

### Technical Field

The present invention relates to a periodic structure and a measurement method using the periodic structure.

### Background Art

Examples of existing methods used to analyze the characteristics of a substance include a method of measuring the characteristics of an object by placing the object on a structure in which aperture portions are arranged (periodic structure), irradiating the periodic structure on which the object has been placed with an electromagnetic wave, and analyzing the transmittance spectrum of the electromagnetic wave. To be specific, for example, the characteristics of an object, such as a protein, can be measured by irradiating a metal mesh, to which the protein has been attached, with a terahertz wave and analyzing the transmittance spectrum.

For example, Patent Document 1 (WO2011/027642) describes a method of measuring the characteristics of an object on the basis of a change in the frequency characteristic of an electromagnetic wave scattered by a periodic structure. In this method, a plate-shaped periodic structure including a plurality of aperture portions each having a shape that is not mirror-symmetric with respect to an imaginary plane is used, and the periodic structure is irradiated with an electromagnetic wave so that the polarization direction of the electromagnetic wave is perpendicular to the imaginary plane.

However, in the measurement method described in the Patent Document 1, it is difficult to measure various types and various amounts of objects by using one periodic structure. This is because, in this method, the periodic structure is irradiated with an electromagnetic wave having one polarization direction, and therefore a dip waveform or the like that occurs due to a resonance of only one mode can be measured.

Non Patent Document 1 (Dai Ohnishi et al., "Optical properties of gold nano-slit-rings with plasmonic resonance frequencies in terahertz region", Nanotech Japan, Focus 26 <11-th> Optical properties of gold nano-slit-rings, October 8, 2010, Vol.3, No. 5) describes that a structure or the like in which nano-slit rings each having a gap (slit) are periodically arranged on a substrate has a plasmonic resonance frequency in a terahertz region.

However, in the technology described in Non Patent Document 1, resonators, which are independent slit rings and the like, are periodically arranged on a substrate. Therefore, in order to measure the desired characteristics, it is necessary to adjust and optimize the distance between the resonators. Because the distance is very small relative to the size of each resonator (about 1/10 the size), the distance varies considerably when the structure is actually fabricated. Therefore, when the structure described in Non Patent Document 1 is irradiated with an electromagnetic wave such as a terahertz wave, a large amount of spurious resonance occurs. As a result, it is difficult to detect an object on the basis of a change in a scattering spectrum.

### Citation List

### Patent Document

Patent Document 1: WO2011/027642

### Non Patent Document

Non Patent Document 1: Dai Ohnishi et al., "Optical properties of gold nano-slit-rings with plasmonic resonance frequencies in terahertz region", Nanotech Japan, Focus 26 <11-th> Optical properties of gold nano-slit rings, October 8, 2010, Vol.3, No. 5

### Summary of Invention

### Technical Problem

An object of the present invention is to provide a periodic structure that serves as a high-sensitivity measurement device that can individually measure various types and various amounts of objects and to provide a measurement method using the periodic structure.

### Solution to Problem

According to the present invention, a plate-shaped periodic structure includes at least two aperture portions extending through the periodic structure in a direction perpendicular to a main surface of the periodic structure and periodically arranged in at least one direction along the main surface. Each of the aperture portions has a shape that is not mirror-symmetric with respect to an imaginary plane that is a plane perpendicular to the main surface. Each of the aperture portions includes a constricted portion at which a gap distance of the aperture portion is partially small, the gap distance being a width in a direction parallel to a line of intersection of the main surface and the imaginary plane.

It is preferable that the periodic structure according to the present invention be used in a measurement method that includes placing an object on the periodic structure, irradiating the periodic structure with a linearly polarized electromagnetic wave in a direction perpendicular to the main surface of the periodic structure, detecting an electromagnetic wave that has been forward scattered or back scattered by the periodic structure, and measuring a characteristic of an object on the basis of a change that occurs, due to the presence of the object, in a dip waveform generated in a frequency characteristic of the forward scattered electromagnetic wave or in a peak waveform generated in a frequency characteristic of the back scattered electromagnetic wave.

It is preferable that the gap distances of parts of the aperture portions on both sides of the constricted portion are each larger than the gap distance of the constricted portion.

According to another aspect of the present invention, a measurement method includes placing an object on the periodic structure according to Claim 1; irradiating the periodic structure with a linearly polarized electromagnetic wave in a direction perpendicular to the main surface of the periodic structure; detecting an electromagnetic wave that has been forward scattered or back scattered by the periodic structure; and measuring a characteristic of an object on the basis of a change that occurs, due to the presence of the object, in a dip waveform generated in a frequency characteristic of the forward scattered electromagnetic wave or in a peak waveform generated in a frequency characteristic of the back scattered electromagnetic wave.

It is preferable that the measurement method further include a first step of irradiating the periodic structure with a first electromagnetic wave that is polarized in a direction perpendicular to the imaginary plane, and/or a second step of irradiating the periodic structure with a second electromagnetic wave that is polarized in a direction parallel to the imaginary plane; and a mode of a resonance that occurs in the first step be different from a mode of a resonance that occurs in the second step.

It is preferable that the resonance that occurs in the first step be a TE11-mode-like resonance, and the resonance that occurs in the second step be an LC resonance.

It is preferable that a width of the constricted portion in the direction parallel to the line of intersection of the main surface and the imaginary plane be adjusted so that a frequency of the dip waveform or the peak waveform based on the resonance that occurs in the second step is 1/10 to 10 times a frequency of the dip waveform or the peak waveform based on the resonance that occurs in the first step.

### Advantageous Effects of Invention

With the present invention, dip waveforms that occur due to resonances in two different modes (for example, a TE11-mode-like resonance and an LC resonance) can be detected by changing the polarization direction. Therefore, various type and various amounts of objects can be measured by using one periodic structure. In other words, detection of objects using different measurement principles can be performed by using one periodic structure.

### Brief Description of Drawings

[Fig. 1] Fig. 1 is a schematic diagram for illustrating an outline of a measurement method according to the present invention.
[Fig. 2] Fig. 2 is a front view of a periodic structure according to a first embodiment.
[Fig. 3] Fig. 3 is a front view of a unit structure of the periodic structure shown in Fig. 2.
[Fig. 4] Fig. 4 is a front view of a periodic structure according to a second embodiment.
[Fig. 5] Fig. 5 is a front view of a periodic structure according to a third embodiment.
[Fig. 6] Fig. 6 is a front view of another example of a periodic structure according to the third embodiment.
[Fig. 7] Fig. 7 is a schematic side view for illustrating the conditions used in an electromagnetic field simulation.
[Fig. 8] Fig. 8 shows transmittance spectra obtained in Example 1.
[Fig. 9] Figs. 9(a) and 9(b) show a field intensity distribution that occurred when a periodic structure was irradiated with an electromagnetic wave having a frequency corresponding to a dip waveform of a Y-polarized wave in Fig. 8, and Figs. 9(c) and 9(d) show a field intensity distribution that occurred when the periodic structure was irradiated with an electromagnetic wave having a frequency corresponding to a dip waveform of a Z-polarized wave in Fig. 8.
[Fig. 10] Fig. 10 shows transmittance spectra of Y-polarized waves obtained in Example 2.
[Fig. 11] Fig. 11 shows transmittance spectra of Z-polarized waves obtained in Example 2.
[Fig. 12] Fig. 12(a) is a perspective view of a unit structure of the periodic structure shown in Fig. 2, and Fig. 12(b) is a perspective view of the unit structure in a state in which a cutout portion (constricted portion) of the unit structure shown in Fig. 12(a) is filled with polyethylene.
[Fig. 13] Fig. 13 shows transmittance spectra obtained in Example 3.
[Fig. 14] Fig. 14 is a front view of a periodic structure according to Comparative Example 1.
[Fig. 15] Fig. 15 is a front view of a unit structure of the periodic structure according to Comparative Example 1.
[Fig. 16] Fig. 16 shows transmittance spectra obtained in Comparative Example 1.
[Fig. 17] Fig. 17 shows transmittance spectra obtained in Example 4.
[Fig. 18] Fig. 18 shows transmittance spectra obtained in Example 5.
[Fig. 19] Fig. 19 shows transmittance spectra obtained in Example 6.

### Description of Embodiments

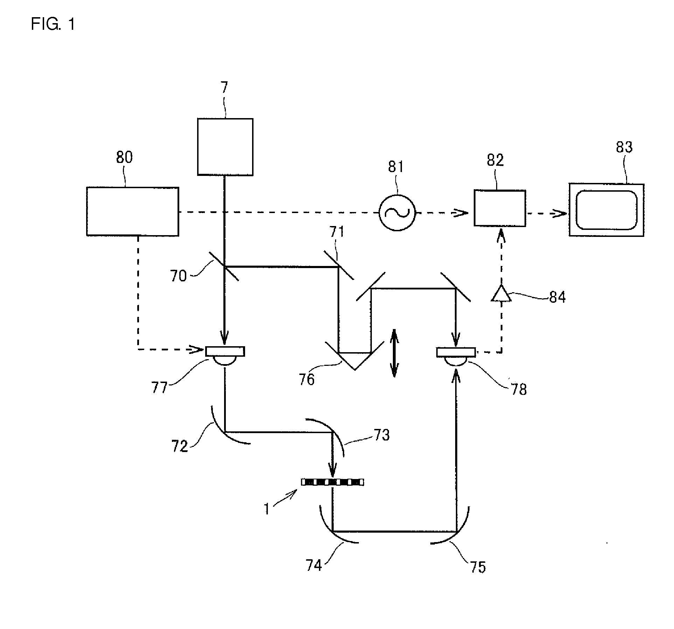

Referring to Fig. 1, an outline of an example of a measurement method according to the present invention will be described. Fig. 1 is a schematic diagram showing the overall structure of a measurement apparatus used for the measurement method according to the present invention. The measurement apparatus utilizes pulses of an electromagnetic wave (having a frequency in the range of, for example, 20 GHz to 120 THz), which is generated by irradiating a semiconductor material with a laser beam emitted from a laser 7 (for example, a short optical pulse laser).

In Fig. 1, the laser 7 emits a laser beam, and a half mirror 70 splits the laser beam into two laser beams. One of the laser beams is incident on a photoconductive device 77 for generating an electromagnetic wave. The other laser beam is reflected by a plurality of mirrors 71 (numerals are not attached to mirrors having the same function), passes through a time-delay stage 76, and is incident on a photoconductive device 78 for receiving the electromagnetic wave. As each of the photoconductive devices 77 and 78, a general photoconductive device made by forming a dipole antenna having a gap portion in LT-GaAs (low-temperature growth GaAs) can be used. A solid-state laser, such as a fiber laser or a titanium-sapphire laser, can be used as the laser 7. The electromagnetic wave may be generated or detected by using a surface of a semiconductor without an antenna or by using a photoelectric crystal, such as a ZnTe crystal. A power supply 80 supplies an appropriate bias voltage to a gap portion of the photoconductive device 77 for generating an electromagnetic wave.

A parabolic mirror 72 forms the generated electromagnetic wave into a collimated beam. A parabolic mirror 73 reflects the collimated beam, and a periodic structure 1 is irradiated with the collimated beam. The periodic structure 1 may be disposed in a recess of a measurement device (microplate) described below, or may be disposed outside the measurement device (microplate)

Parabolic mirrors 74 and 75 reflect a terahertz wave that has passed through the periodic structure 1, and the photoconductive device 78 receives the terahertz wave. An amplifier 84 amplifies an electromagnetic wave signal received by the photoconductive device 78, and a lock-in amplifier 82 obtains the electromagnetic wave signal. A PC (personal computer) 83, including a processing unit, performs signal processing, such as Fourier transformation, on the electromagnetic wave signal, thereby calculating a transmittance spectrum and the like of the periodic structure 1. To obtain the electromagnetic wave signal with the lock-in amplifier 82, the bias voltage applied by the power supply 80 to a gap of the photoconductive device 77 is modulated (an amplitude of 5 V to 30 V) by using a signal generated by an oscillator 81. Thus, synchronous detection is performed and thereby the signal to noise ratio can be improved.

The measurement method described above is usually called terahertz time-domain spectroscopy (THz-TDS). Instead of THz-TDS, Fourier transformation infrared spectroscopy (FT-IR) or the like can be used.

Fig. 1 illustrates a case where transmittance of an electromagnetic wave is measured. However, in the present invention, reflectance of an electromagnetic wave may be measured. Preferably, transmittance in the zeroth-order direction and reflectance in the zeroth-order direction are measured.

In general, a spectrum diffracted by a diffraction grating can be represented as follows:

s (sin i - sin θ) = nλ (1)

where s is the grid pitch of the diffraction grating, i is the incident angle, θ is the diffraction angle, and λ is the wavelength. In the term "zeroth-order direction", "zeroth-order" corresponds to a case where n in the expression (1) is 0. Since s and λ cannot be 0, n = 0 if and only if sin i - sin θ = 0. Therefore, the "zeroth-order direction" refers to a direction at which the incident angle is the same as the diffraction angle, that is, a direction such that the propagation direction of the electromagnetic wave does not change.

Preferably, an electromagnetic wave used in a measurement method according to the present invention is an electromagnetic wave (terahertz wave) having a wavelength λ in the range of 0.3 µm to 15 mm (frequency: 20 GHz to 1 PHz). To perform measurement with a higher sensitivity, it is preferable that a periodic structure be irradiated with an electromagnetic wave having a short wavelength λ, and it is more preferable that the wavelength λ be 300 µm or less (frequency: 1 THz or greater).

An example of the electromagnetic wave is a terahertz wave generated by emitting a light beam from a short optical pulse laser and exerting an optical rectification effect of a photoelectric crystal, such as ZnTe. Another example of the electromagnetic wave is a terahertz wave generated by emitting a light beam from a short optical pulse laser, exciting free electrons in a photoconductive antenna, and causing an electric current to be instantaneously generated due to a voltage applied to the photoconductive antenna. Another example is a terahertz wave generated from a high-pressure mercury lamp or a high-temperature ceramic. Another example of the electromagnetic wave is visible light emitted from a semiconductor laser or a photodiode.

Preferably, an electromagnetic wave with which a periodic structure is irradiated in the measurement method according to the present invention is a linearly polarized electromagnetic wave. The linearly polarized electromagnetic wave may be a linearly polarized electromagnetic wave that is generated from an unpolarized light source or a circularly polarized light source and that has passed through a (linear) polarizer. Alternatively, the linearly polarized electromagnetic wave may be emitted from a polarized light source. A wire grid or the like may be used as the linear polarizer.

In the present invention, the phrase "measure a characteristic of an object" refers to measuring the amount of the object, which is a chemical compound, or measuring a characteristic, such as the dielectric constant, of the object. Examples of such measurement include measurement of the amount of an object included in a solution by a small amount and identification of an object. To be specific, for example, a characteristic of an object may be measured by using the measurement apparatus described above after attaching the object to the surface of the periodic structure by immersing the periodic structure in a solution of the object, removing solvent and excess object, and drying the periodic structure. For another example, a characteristic of an object may be measured by using the measurement apparatus described above after attaching the object to a sheet-shaped substrate made of a polymer or the like and bringing the periodic structure in close contact with the sheet-shaped substrate.

To measure the amount of an object in the present invention, it is preferable that the amount of the object be measured by performing comparison with a calibration curve that is made on the basis of frequency characteristics that have been obtained beforehand by measuring various amounts of objects.

### (Periodic Structure)

A periodic structure according to the present invention is a plate-shaped periodic structure including at least two aperture portions extending through the periodic structure in a direction perpendicular to a main surface of the periodic structure and periodically arranged in at least one direction along the main surface. All of the aperture portions may be periodically arranged. Alternatively, as long as the effect of the present invention is not considerably reduced, only some of the aperture portions may be arranged periodically and the other aperture portions may be arranged non-periodically.

The periodic structure according to the present invention is characterized in that (1) each of the aperture portions has a shape that is not mirror-symmetric with respect to an imaginary plane that is a plane perpendicular to the main surface, and (2) each of the aperture portions includes a constricted portion. The term "constricted portion" refers to a portion at which the width (gap distance) of the aperture portion in a direction parallel to a line of intersection of the main surface and the imaginary plane is partially small.

Because each of the aperture portions has a shape that is not mirror-symmetric with respect to an imaginary plane that is a plane perpendicular to the main surface, a TE11-mode-like resonance occurs in the periodic structure when the periodic structure is irradiated with a first electromagnetic wave that is polarized in a direction that is perpendicular to the imaginary plane.

When the periodic structure is irradiated with a second electromagnetic wave that is polarized in a direction parallel to the imaginary plane, coupling occurs because the electric field direction of the electromagnetic wave coincides with the electric field direction when the constricted portion resonates. Therefore, an LC resonance occurs because energy is transferred from the electromagnetic wave to the LC resonator. When the periodic structure is expressed as an equivalent circuit, the constricted portion corresponds to a capacitor (C) having a narrow gap, and the structure around the aperture portion, excluding the constricted portion, corresponds to a coil (L).

It is preferable that the gap distances of parts of the aperture portions on both sides of the constricted portion be each larger than the gap distance of the constricted portion. In this case, a stronger LC resonance occurs than in a case where the gap distance of only a part of the aperture portion on one side of the constricted portion is larger than the gap distance of the constricted portion (a case where the constricted portion is located at an end of the aperture portion). Therefore, the sensitivity of measurement using an LC resonance is improved.

Preferably, the periodic structure is a semi-periodic structure or a periodic structure. A semi-periodic structure is a structure that does not have translational symmetry but has a certain order in arrangement. Examples of a one-dimensional semi-periodic structure include a Fibonacci structure, and examples of a two-dimensional semi-periodic structure include a Penrose structure. A periodic structure is a structure having spatial symmetry, which is typically translational symmetry. Depending on the dimension of symmetry, the periodic structure is classified into a one-dimensional periodic structure, a two-dimensional periodic structure, and a three-dimensional periodic structure. Examples of a one-dimensional periodic structure include a wire grid structure and a one-dimensional diffraction grating. Examples of a two-dimensional periodic structure include a mesh filter and a two-dimensional diffraction grating. Among these periodic structures, a two-dimensional periodic structure is preferably used.

According to the present invention, the characteristics of an object are measured on the basis of at least one parameter related to the frequency characteristic of an electromagnetic wave scattered by the periodic structure. For example, the characteristics of an object can be measured on the basis of a change that occurs, due to the presence of the object, in a dip waveform generated in the frequency characteristic of an electromagnetic wave that has been forward scattered (transmitted) by the periodic structure or in a peak waveform generated in the frequency characteristic of an electromagnetic wave that has been back scattered (reflected) by the periodic structure.

A dip waveform is a trough-shaped (downwardly convex) waveform that appears in a part the frequency characteristic (for example, a transmittance spectrum) of the periodic structure in a frequency range in which the ratio of an electromagnetic wave with which the periodic structure is irradiated to an electromagnetic wave that is detected (for example, the transmittance of the electromagnetic wave) is relatively large. A peak waveform is a mound-shaped (upwardly convex) waveform that appears in a part of the frequency characteristic (for example, a reflectance spectrum) of the periodic structure in a frequency range in which the ratio of an electromagnetic wave with which the periodic structure is irradiated to an electromagnetic wave that is detected (for example, the reflectance of the electromagnetic wave) is relatively small.

In the periodic structure according to the present invention, each of the aperture portions can be regarded as a waveguide, because the aperture portion has the shape described above. In this case, it is preferable that a TE11-mode-like resonance occur in a first step in which the periodic structure is irradiated with a first electromagnetic wave that is polarized in a direction perpendicular to the imaginary plane and an LC resonance occur in a second step in which the periodic structure is irradiated with a second electromagnetic wave that is polarized in a direction parallel to the imaginary plane. Note that the term "TE11-mode-like resonance" refers not only to a TE11-mode resonance but also to a resonance that is similar to a TE11-mode resonance.

When a TE11-mode-like resonance occurs, a dip waveform in the frequency characteristic of a forward scattered electromagnetic wave or a peak waveform in the frequency characteristic of a back scattered electromagnetic wave becomes sharp in the first step, and therefore the measurement sensitivity is improved. Moreover, the measurement sensitivity in measuring an object can be improved, because the amount of frequency shift of a dip waveform or a peak waveform before and after the object is placed on the periodic structure is increased.

When an LC resonance occurs, an electric field is localized in the constricted portion. Therefore, the measurement sensitivity is improved in the second step. In the first step, a specimen having an extremely small size is measured with respect to the spacial size of a portion in which a TE11-mode electric field is present, that is, the entire structure in which the aperture portions are arranged. In contrast, in the second step, a specimen having an extremely small size is measured by using the spatial size of a portion surrounding the constricted portion, which is smaller than the size of the entirety of a metal mesh (and an electric field generated in the portion). Therefore, the sensitivity is improved.

Therefore, with the periodic structure according to the present invention, dip waveforms generated due to resonances in two different modes (for example, a TE11-mode-like resonance and an LC resonance) can be detected by changing the polarization direction. Therefore, various types and various amounts of objects can be measured by using one periodic structure. In other words, measurements with two sensitivities can be performed by using one sensor.

Thus, for example, various amounts of objects can be measured by using one periodic structure as follows. (1) In order to measure a large amount of object (large-scale object), such as a film, the first step is performed. In the first step, an object is measured by disposing the object on the entirety of the periodic structure, where the field intensity due to a TE11-mode-like resonance is relatively strong, and the periodic structure is irradiated with a first electromagnetic wave (Z-polarized wave) polarized in a direction perpendicular to the imaginary plane. (2) In order to measure an extremely small amount of object (small-scale object) with a high sensitivity, the second step is performed. In the second step, an object is measured by disposing the object around the constricted portion of the aperture portion, where the field intensity due to an LC resonance is relatively strong, and the periodic structure is irradiated with a first electromagnetic wave (Y-polarized wave) polarized in a direction parallel to the imaginary plane. For example, the measurements in (1) and (2) described above can be performed by using one structure having the aperture portions arranged therein by fixing a probe A, on which an extremely small amount of object is to be placed, to only the constricted portion of each of the aperture portions, and by fixing a probe B, for measuring a small amount of object, to other parts of each of the aperture portions.

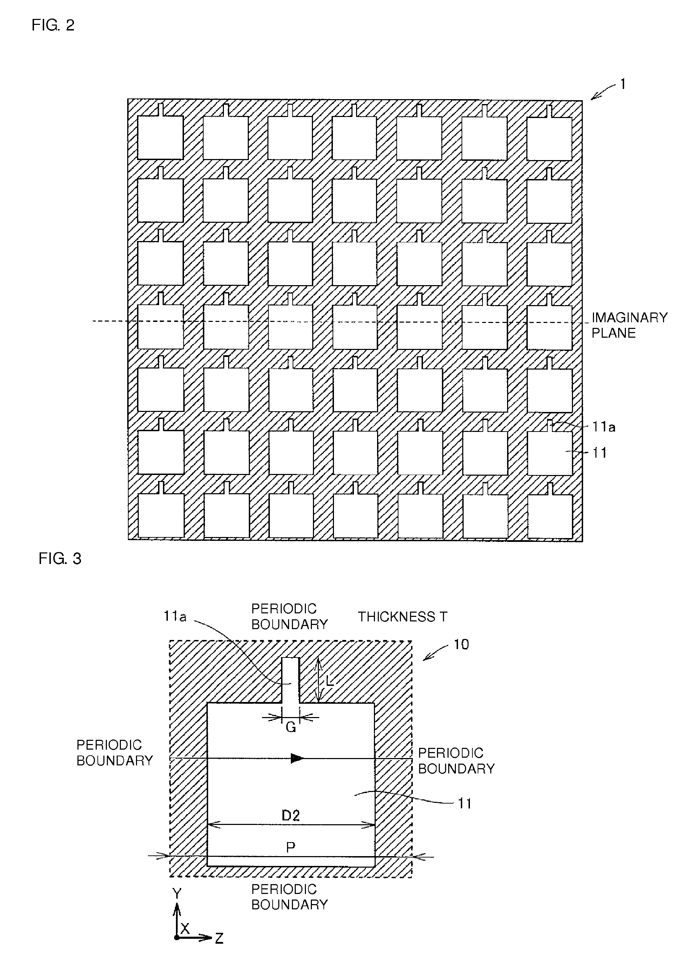

It is difficult to determine a general range of the dimensions of the aperture portion, because the aperture portion should be designed appropriately in accordance with the measurement method, the characteristics of the material of the periodic structure, the frequency of an electromagnetic wave used, and the like. However, in the case of detecting a forward scattered electromagnetic wave by using a periodic structure in which aperture portions are two-dimensionally and periodically arranged, it is preferable that the grid pitch (for example, denoted by P in Fig. 3) of the aperture portion be 1/10 to 10 times the wavelength of an electromagnetic wave used for measurement. If the grid pitch of aperture portion is not in this range, scattering might not occur. It is preferable that the size of the opening of the aperture portion (for example, denoted by D2 in Fig. 3) be 1/10 to 10 times the wavelength of an electromagnetic wave used for measurement. If the size of the opening of the aperture portion is not in this range, the intensity of a transmitted (forward scattered) electromagnetic wave might be weak and detection of a signal may become difficult.

It is preferable that the gap distance of the constricted portion (cutout portion, slit) be adjusted so that the frequency of a dip waveform or a peak waveform based on a resonance that occurs in the second step be 1/10 to 10 time the frequency of a dip waveform or a peak waveform based on a resonance that occurs in the first step. In this case, the apparatus cost can be reduced, because the measurement in the first step and the measurement in the second step can be performed simultaneously or independently by using the same measurement apparatus.

It is difficult to determine a general range of the average thickness of the periodic structure, because the periodic structure should be designed appropriately in accordance with the measurement method, the characteristics of the material of the periodic structure, the frequency of an electromagnetic wave used, and the like. However, in the case of detecting a forward scattered electromagnetic wave, it is preferable that the thickness of the periodic structure be several times the wavelength of an electromagnetic wave used for measurement or less. If the average thickness of the structure is greater than this range, the intensity of a forward scattered electromagnetic wave might be weak and detection of a signal may become difficult.

In the structure described in Non Patent Document 1, individual resonators, each of which is a very small ring, are periodically arranged. Therefore, it is necessary to adjust the distances between the resonators. In contrast, the periodic structure according to the present invention generally has an integrated structure. Therefore, it is not necessary to adjust the distances between the resonators, and the influence of spurious resonances that occur due to the distances between the resonators is small (or eliminated).

In the present invention, various known methods may be used to place an object on the periodic structure. For example, the object may be directly attached to the periodic structure or may be attached to the periodic structure by using a support film or the like. In order to improve the measurement sensitivity and to perform reproducible measurement by suppressing variation in measurement, it is preferable that an object be directly attached to a surface of the periodic structure.

Examples of the case where an object is directly attached to the periodic structure include not only a case where a chemical bond or the like is formed directly between the object and a surface of the periodic structure but also a case where an object is bonded to host molecules that have been bonded to a surface of the periodic structure beforehand. Examples of the chemical bond includes a covalent bond (for example, a covalent bond between a metal and a thiol group), a Van der Waals bond, an ionic bond, a metallic bond, and a hydrogen bond. Preferably, the chemical bond is a covalent bond. A host molecule is, for example, a molecule to which an object can be specifically bonded. Examples of a combination of a host molecule and an object include an antigen and an antibody, a sugar chain and a protein, a lipid and a protein, a low-molecular-weight compound (ligand) and a protein, a protein and a protein, a single-stranded DNA and a single-stranded DNA.

In the case of directly attaching an object to a periodic structure, it is preferable that at least a part of a surface of the periodic structure is made of a conductor.

A conductor is a substance that allows electricity to pass therethrough, and a conductor used here may be a metal or a semiconductor. Examples of the metal include a metal that can be bonded to a functional group in a chemical compound, such as a hydroxyl group, a thiol group, or a carboxyl group; a metal that can be coated with a functional group, such as a hydroxyl group or an amino group; and an alloy of such metals. To be specific, the metal may be gold, silver, copper, nickel, chrome, silicon, or germanium. Preferably, the metal is gold, silver, copper, nickel, or chrome. More preferably, the metal is gold. Using gold or nickel is particularly advantageous in a case where an object has a thiol group (-SH group), because the thiol group can be bonded to a surface of the periodic structure. Using nickel is particularly advantageous in a case where an object has a hydroxyl group (-OH) or a carboxyl group (-COOH), because such a functional group can be bonded to a surface of the periodic structure. Examples of the semiconductor include group IV semiconductors (such as Si and Ge); group II-VI semiconductors (such as ZnSe, CdS, and ZnO); group III-V semiconductors (such as GaAs, InP, and GaN); compound semiconductors, such as group IV compound semiconductors (such as SiC and SiGe) and group I-III-VI semiconductors (such as CuInSe2); and organic semiconductors.

Specific examples of a method of attaching an object to the periodic structure by using a support film or the like include a method of affixing a support film, such as a polyamide resin film, to a surface of the periodic structure and attaching the object to the support film; and a method of, instead of using a support film, using an airtight vessel or a fluid-tight vessel and measuring a fluid or a substance dispersed in a fluid.

For example, an object can be disposed at a position at which the field intensity due to a resonance is relatively strong by covering the surface of a part of the periodic structure at which the field intensity is relatively strong with a substance that can be easily bonded to the object and causing the object to be selectively placed on the portion.

### (First Embodiment)

Fig. 2 illustrates a periodic structure according to an embodiment of the present invention. The periodic structure shown in Fig. 2 includes rectangular aperture portions, each having a constricted portion (cutout portion) 11 a at one end thereof. In the present embodiment, the entire shape of an aperture portion 11, including the constricted portion 11 a, is not mirror-symmetric with respect to an imaginary plane that is a plane perpendicular to the main surface of the periodic structure 1. Moreover, the aperture portion 11 includes the constricted portion 11 a, at which the gap distance (the width in a direction parallel to the line of intersection of the main surface and the imaginary plane) of the aperture portion 11 is partially small.

The periodic structure shown in Fig. 2 is a structure in which unit structures 10 having the aperture portions 11, one of which is shown in Fig. 3, are periodically arranged and integrated with each other.

### (Second Embodiment)

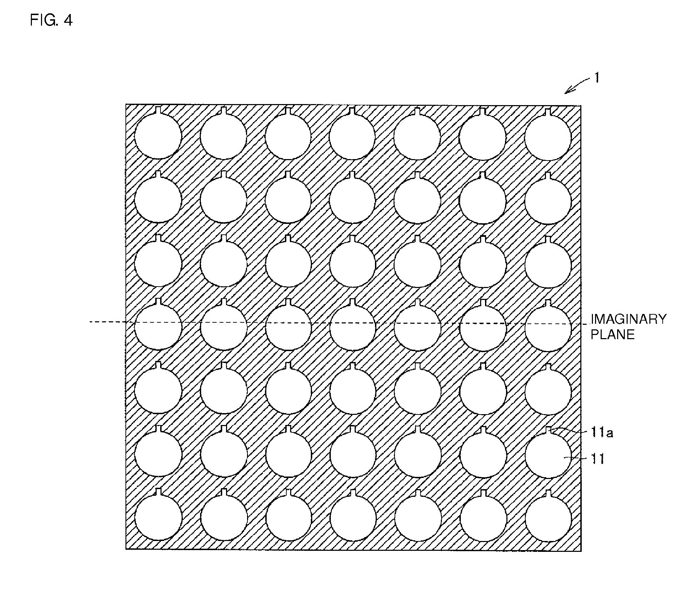

Fig. 4 illustrates a periodic structure according to another embodiment of the present invention. The periodic structure shown in Fig. 4 includes circular aperture portions, each having a constricted portion (cutout portion) 11 a at one end thereof. Also in the present embodiment, the entire shape of an aperture portion 11, including the constricted portion 11 a, is not mirror-symmetric with respect to an imaginary plane that is a plane perpendicular to the main surface of the periodic structure 1. Moreover, the aperture portion 11 includes the constricted portion 11 a, at which the gap distance of the aperture portion 11 is partially small.

### (Third Embodiment)

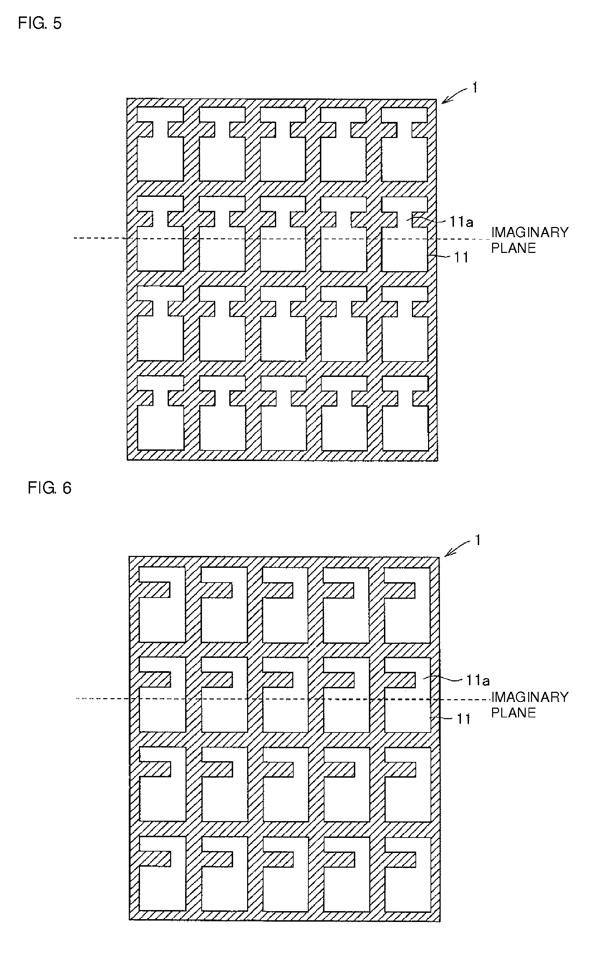

Fig. 5 illustrates a periodic structure according to still another embodiment of the present invention. The periodic structure shown in Fig. 5 includes rectangular aperture portions, each having a slit portion (constricted portion) 11 a in a part thereof. It is necessary that the constricted portion 11 a is not mirror-symmetric with respect to an imaginary plane. Also in the present embodiment, the entire shape of an aperture portion 11, including the constricted portion 11 a, is not mirror-symmetric with respect to an imaginary plane that is a plane perpendicular to the main surface of the periodic structure 1. Moreover, the aperture portion 11 includes the constricted portion 11 a, at which the gap distance of the aperture portion 11 is partially small.

As shown in Fig. 5, the constricted portion 11 a may be formed so that the entire shape of the aperture portion 11 is mirror-symmetric with respect to a plane that is perpendicular to both the imaginary plane and the main surface of the periodic structure 1. Alternatively, as shown in Fig. 6, the constricted portion 11 a may be formed so that the entire shape of the aperture portion 11 is not mirror-symmetric with respect a plane that is perpendicular to both the imaginary plane and the main surface of the periodic structure 1.

The entire shape (external shape) of the periodic structure is not limited to square shapes shown in Figs. 2 to 6. Any closed shape, such as a rectangular shape or a circular shape, may be used. The number of constricted portions (slits or cutout portions) in each aperture portion is not limited to one. Each aperture portion may have a plurality of constricted portions.

### EXAMPLES

### (Example 1)

By using a three-dimensional electromagnetic field simulation software (Micro-stripes, made by CST AG.), a simulation calculation of the frequency characteristic of the electromagnetic wave transmittance of the periodic structure shown in Fig. 2 was performed. The calculation was performed for a unit structure of the periodic structure by using a periodic boundary condition.

Fig. 3 is a front view of a unit structure of the periodic structure shown in Fig. 2. One of the main surfaces of each unit structure 10 was used as an incident surface, the other main surface was used as a detection surface, and other surfaces were used as periodic boundaries (dotted lines). Design parameters shown in Fig. 3 were set as follows: P 260 µm, D2 180 µm, T (thickness) 60 µm, G 20 µm, and L 50 µm. The material of the periodic structure was Au. For the calculation, the unit structure was divided into unit cells each having dimensions of 5 µm in all of XYZ directions.

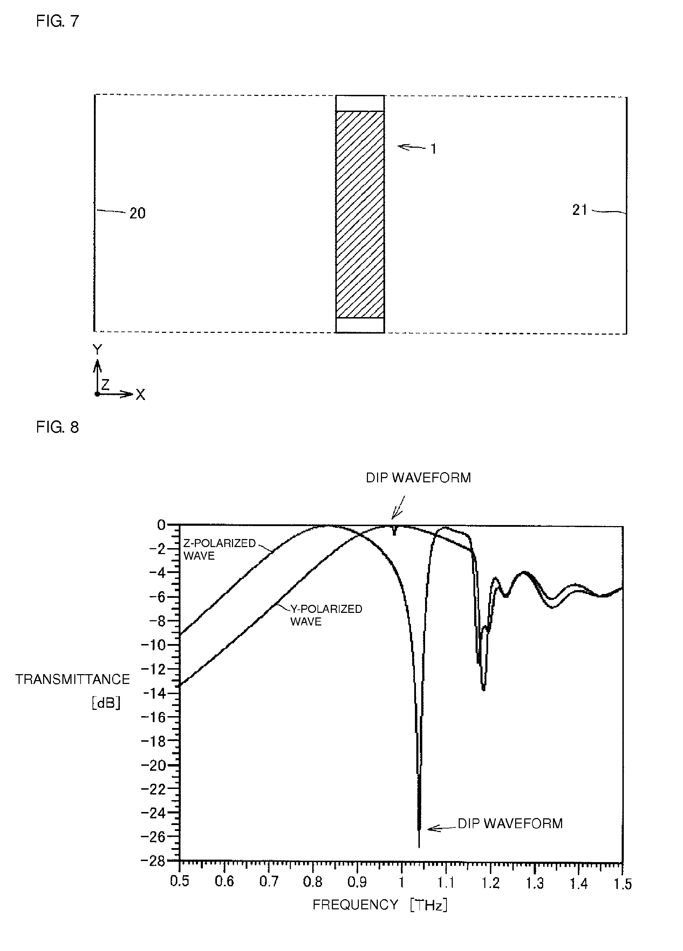

As illustrated in Fig. 7, a linearly polarized electromagnetic wave (plane wave) was emitted from a wave source 20 in a direction perpendicular to the main surface of the periodic structure 1, and the electromagnetic wave that had passed through the periodic structure 1 was detected by a detection surface 21 disposed opposite the wave source 20. In the present embodiment, the simulation calculation was performed for each of the following two cases: a case where a first electromagnetic wave (Y-polarized wave) polarized in a direction (Y-direction in Figs. 3 and 7) perpendicular to the imaginary plane shown in Fig. 2 was emitted; and a case where a second electromagnetic wave (Z-polarized wave) polarized in a direction (Z-direction in Figs. 3 and 7) parallel to the imaginary plane shown in Fig. 2 was emitted. The distance between the periodic structure 1 and the wave source 20 was 300 µm, and the distance between the periodic structure 1 and the detection surface 21 was 300 µm.

Fig. 8 shows the frequency characteristics (transmittance spectra) of the transmittance of the periodic structure 1 obtained by the calculation.

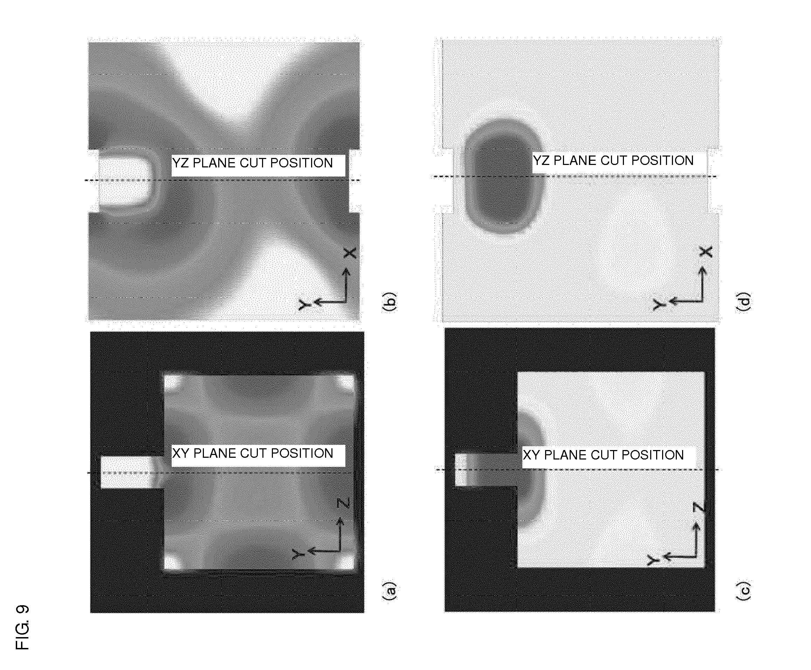

Figs. 9(a) and 9(b) show a field intensity distribution that occurred when a periodic structure was irradiated with an electromagnetic wave having a frequency corresponding to a dip waveform of a Y-polarized wave in Fig. 8, and Figs. 9(c) and 9(d) show a field intensity distribution that occurred when the periodic structure was irradiated with an electromagnetic wave having a frequency corresponding to a dip waveform of a Z-polarized wave in Fig. 8. Figs. 9(a) and 9(c) are views seen in the X-direction of Fig. 3, and Figs. 9(b) and 9(d) are views seen in the Z-direction of Fig. 3.

As can be seen from the results shown in Figs. 8 and 9, in the case where the periodic structure was irradiated with a Y-polarized wave (first electromagnetic wave), a dip waveform appeared in the transmittance spectrum because a TE11-mode-like resonance occurred in the aperture portion of the periodic structure. In the case where the periodic structure was irradiated with a Z-polarized wave (second electromagnetic wave), a dip waveform appeared in the transmittance spectrum because an LC resonance occurred as the cutout portion (constricted portion) served as a capacitor C. On the basis of these results, it is considered that measurement using the periodic structure according to the present invention can be performed in both cases where the periodic structure is irradiated with electromagnetic waves having two different polarization directions.

### (Example 2)

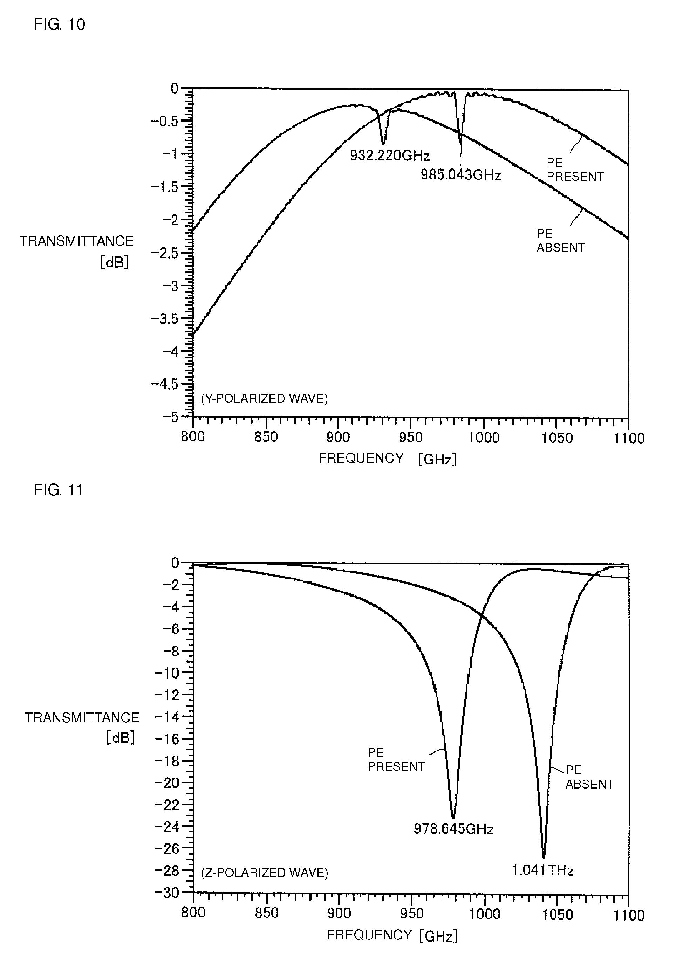

Figs. 10 and 11 each show a change in a dip waveform of a transmittance spectrum when a periodic structure the same as that of Example 1 (periodic structure shown in Fig. 2) was used and a polyethylene film having a thickness of 10 µm (dielectric constant = 2.4) was affixed to the main surface of the periodic structure. Fig. 10 shows a case where the periodic structure was irradiated with a Y-polarized wave (first electromagnetic wave), and Fig. 11 shows a case where the periodic structure was irradiated with a Z-polarized wave (second electromagnetic wave). On the basis of these results, it is considered that measurement using the periodic structure according to the present invention can be performed in both cases where the periodic structure is irradiated with electromagnetic waves having two different polarization directions.

### (Example 3)

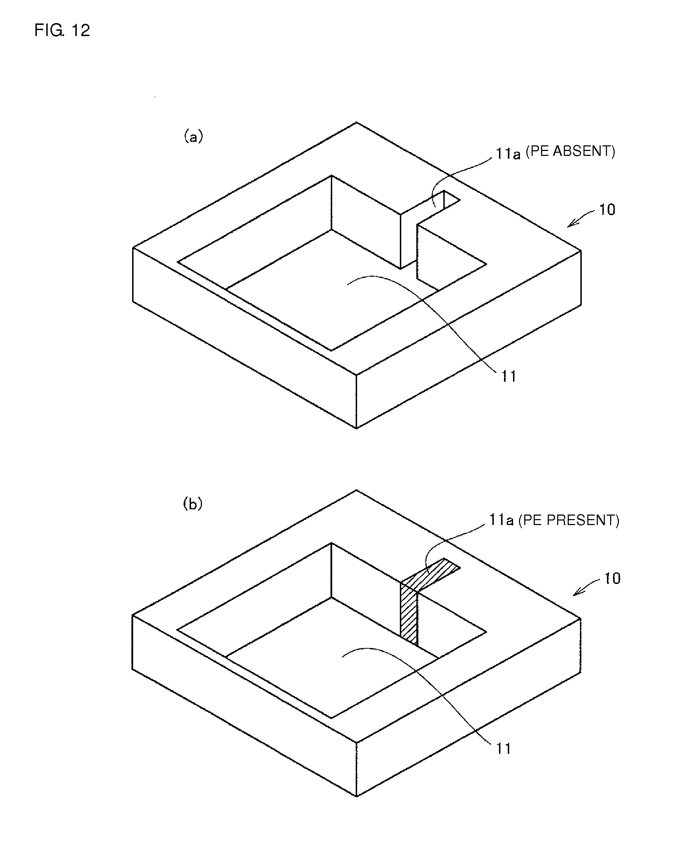

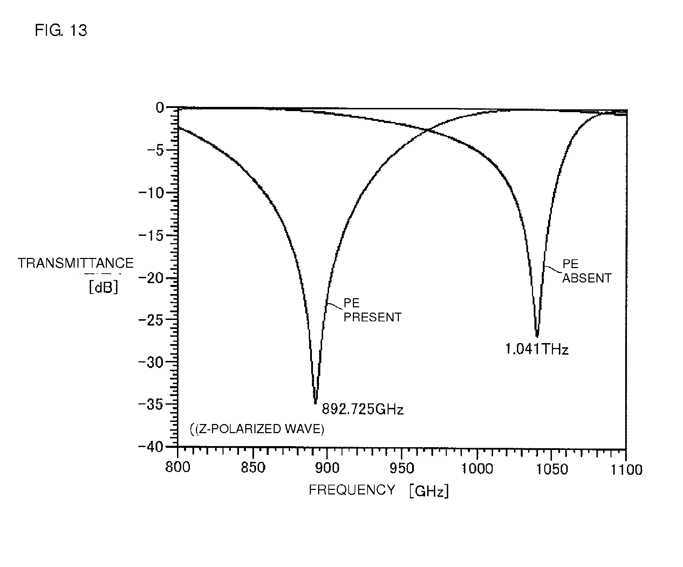

Fig. 12 illustrate a periodic structure the same as that of Example 1 (periodic structure shown in Fig. 2) in a case where the cutout portion (constricted portion) 11 a of the aperture portion 11 is empty (Fig. 12(a)) and in a case where the constricted portion 11 a is filled with polyethylene. Fig. 13 shows a change in the dip waveform of a transmittance spectrum obtained by using the periodic structure. Fig. 13 shows a case where the periodic structure was irradiated with a Z-polarized wave (second electromagnetic wave). By comparing the results shown in Fig. 13 with the results shown in Fig. 11, in the case where the periodic stricter is irradiated with a Z-polarized wave (second electromagnetic wave), it is considered that, because an object is placed only in the constricted portion, the amount of frequency shift of a dip waveform due to the presence of the object is increased and the measurement sensitivity in measurement using the periodic structure according to the present invention is improved.

### (Comparative Example 1)

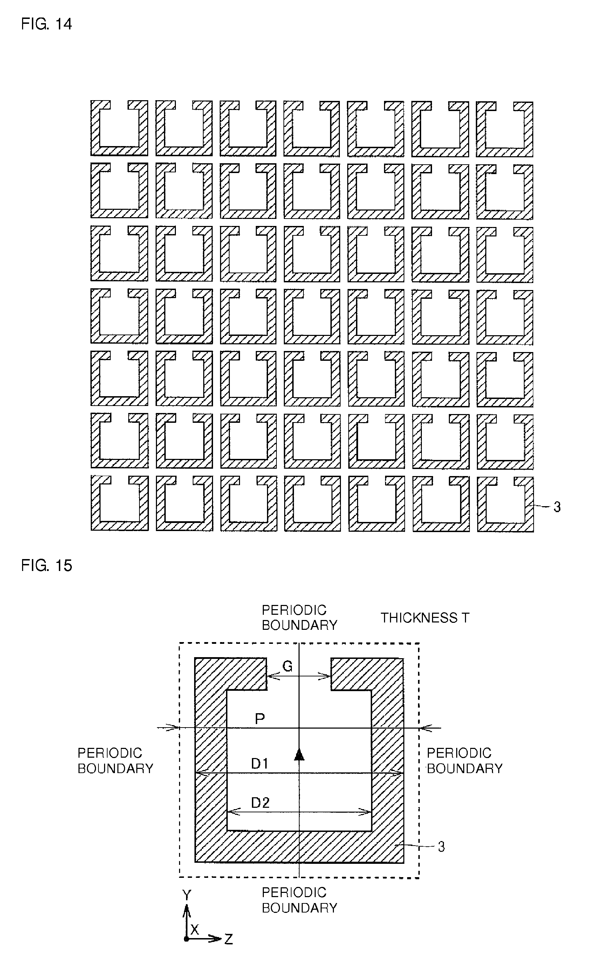

Fig. 14 illustrates a periodic structure according to a Comparative Example, which has a structure in which independent slit ring resonators 3 are periodically arranged. As in Example 1, a simulation calculation of the frequency characteristic of electromagnetic wave transmittance was performed. However, in Comparative Example 1, the calculation was performed for only the case where the periodic structure was irradiated with a Y-polarized wave (first electromagnetic wave).

Fig. 15 is a front view of a unit structure of the periodic structure shown in Fig. 14. One of the main surfaces of a slit ring resonator 3 was used as an incident surface, the other main surface was used as a detection surface, and periodic boundaries were set as shown by dotted lines in Fig. 14. Design parameters shown in Fig. 14 were set as follows. G was set at 0 µm (in other words, simulation was performed on a ring resonator that did not have a slit). D1 was 260 µm, D2 was 180 µm, T (thickness) 60 µm; and P (pitch) was 280, 300, 340, and 420 µm. The material of the periodic structure was Au. For the calculation, the unit structure was divided into unit cells each having dimensions of 5 µm in all of XYZ directions.

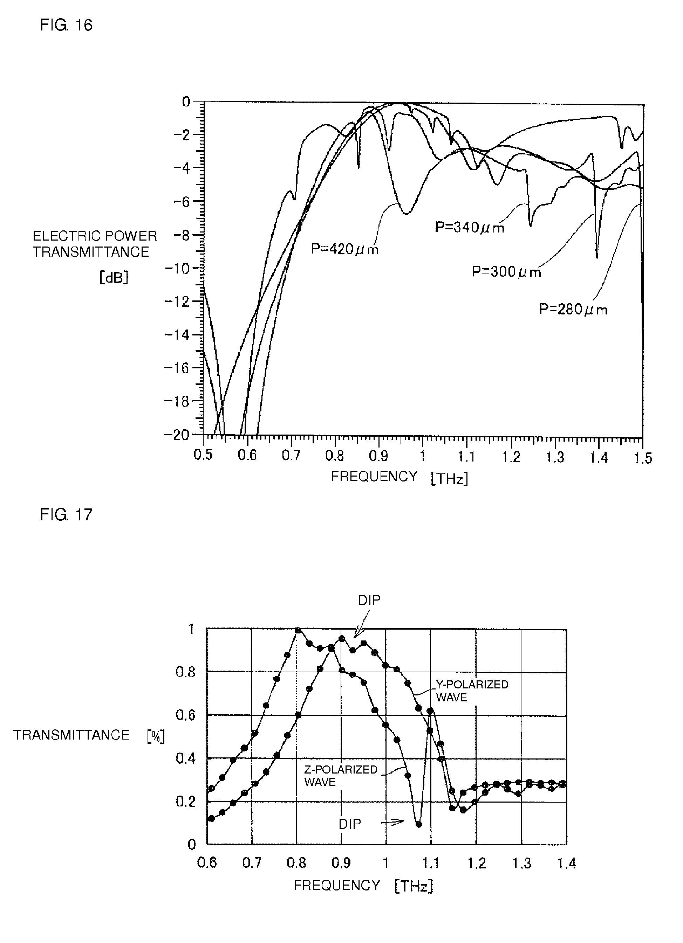

Fig. 16 shows transmittance spectra for the pitches obtained by calculation. As can be seen from the results shown in Fig. 16, in a case where P = 280 µm (ring interval (P - D1): 20 µm) or P = 300 µm (ring interval: 40 µm), as with the transmittance spectrum in Fig. 8 for the case where the periodic structure was irradiated with a Y-polarized wave, a bandpass waveform having a passband near 1 THz was maintained. However, in a case where P = 340 µm (ring interval: 80 µm) or P = 420µm (ring interval: 160 µm), the bandpass waveform was considerably corrupted. Thus, for the periodic structure shown in Fig. 14, it is necessary to adjust the ring interval.

Moreover, when compared with the transmittance spectrum for a Y-polarized wave shown in Fig. 8, it can be seen that notch waveforms (spurious resonance waveforms) occurred in the passband in the waveforms for all of the pitches P.

### (Example 4)

In the present embodiment, the periodic structure shown in Fig. 2 was actually fabricated, and measurement of a transmittance spectrum was performed by using terahertz time-domain spectroscopy (THz-TDS).

A process of fabricating the structure shown in Fig. 2 will be described below. A conductor plate having a smooth surface of a size 300 mm x 300 mm was prepared, and a photosensitive resin layer was formed on the surface so as to have a thickness of 100 µm. A photomask having a pattern of the periodic structure in the main surface shown in Fig. 2 was prepared, and portions corresponding to the aperture portions 11 shown in Fig. 2 were cured through UV radiation. Uncured resin portions were rinsed, and parts of the conductor plate excluding the portions corresponding to the aperture portions 11 of Fig. 2 were exposed. An extremely thin release layer was formed on the exposed parts of the conductor plate by applying a polymer solution to a surface that had been patterned by photolithography and drying the polymer solution.

The conductor plate, obtained as described above, was placed in a Ni-electroplating bath and an electric current was applied to the conductor plate, thereby forming an electroplated nickel layer having a thickness of 60 µm. After plating had been finished, cured resin remaining on the conductor plate was removed by using a solvent and the Ni plating structure was removed from the conductor plate, thereby obtaining a plate-shaped periodic structure made of Ni.

As in Example 1, the obtained periodic structure was irradiated with each of a first electromagnetic wave (Y-polarized wave) and a second electromagnetic wave (Z-polarized wave), and the frequency characteristic of transmittance was measured by THz-TDS by using the apparatus shown in Fig. 1.

Fig. 17 shows the frequency characteristic of transmittance obtained when the periodic structure was irradiated with each of a first electromagnetic wave (Y-polarized wave) and a second electromagnetic wave (Z-polarized wave). It can be seen from the results shown in Fig. 17 that, for a periodic structure actually fabricated, the results the same as the simulation results of Example 1 shown in Fig. 8 were obtained.

### (Example 5)

A polyethylene film having a thickness of 10 µm was prepared as an object. The film was affixed to one of the main surfaces of the periodic structure fabricated in Example 4, and the transmittance spectrum was measured in the same manner as in Example 4.

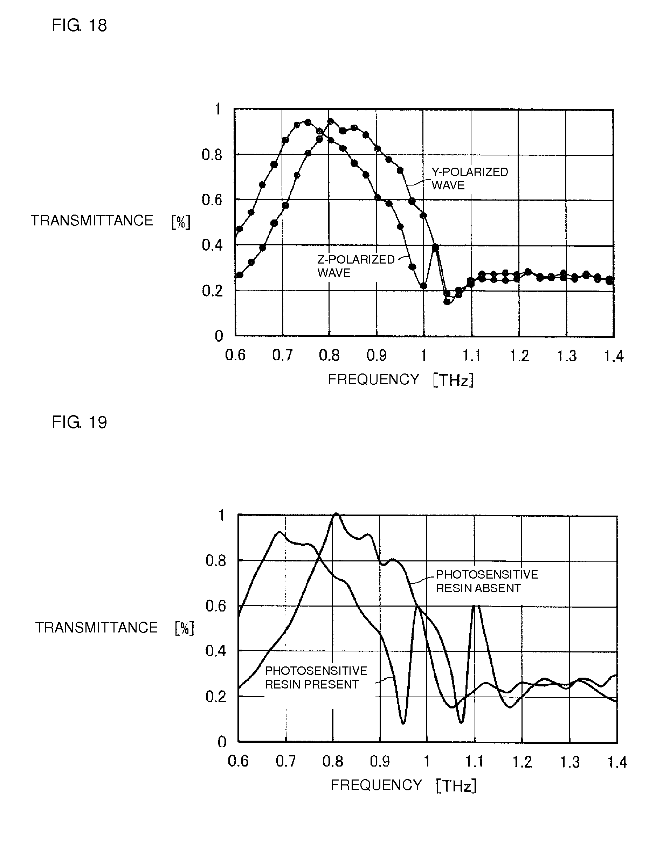

Fig. 18 shows the frequency characteristic of transmittance obtained when the periodic structure was irradiated with each of a first electromagnetic wave (Y-polarized wave) and a second electromagnetic wave (Z-polarized wave). As can be seen from the results shown in Fig. 18, with a periodic structure actually fabricated, the results the same as the simulation results of Example 2 shown in Figs. 10 and 11 were obtained.

### (Example 6)

By using the periodic structure fabricated in Example 4, an object was disposed only in the constricted portion 11 a and the transmittance spectrum of a Z-polarized wave (second electromagnetic wave) was measured.

A surface of the periodic structure obtained in Example 4 was spin-coated with the photosensitive resin used in Example 4 (so that the constricted portion 11 a was also filled with the photosensitive resin). Then, a photomask for exposing only the cutout portions was prepared, the periodic structure was aligned, only the resin in the cutout portions was cured, and other unexposed portions ware rinsed, thereby obtaining a specimen in which the photosensitive resin remained only in the constricted portions (the constricted portions were filled with the photosensitive resin instead of PE in Fig. 9(b)).

The transmittance spectrum of a Z-polarized wave was measured as in Example 3 by using the periodic structure in which only the constricted portions were filled with the photosensitive resin. For comparison, the transmittance spectrum of a Z-polarized wave was measured by using only the periodic structure that was obtained in Example 4 and that was not filled with the photosensitive resin. Fig. 19 shows the measurement results.

It can be seen from the results shown in Fig. 19 that, for the periodic structure actually fabricated, the results the same as the simulation results of Example 3 shown in Fig. 13 were obtained.

In the examples described above, a polyethylene film or a photosensitive resin was used as an object. However, these are only examples. A biomolecule, such as a protein, a sugar chain, or DNA, or an inorganic compound may be used as an object.

In the examples described above, measurement was performed by directly attaching an object to the periodic structure. However the molecules or the like may be fixed by means of specific adsorption using probe molecules, which are fixed to the periodic structure using a thiol group or a silane coupling group.

The embodiments and Examples disclosed herein are only examples in all respects and are not restrictive. The scope of the present invention is not shown in the description above but in the claims, and it is intended the present invention encompasses all modifications within the scope of the claims and equivalents thereof.

### Reference Signs List

- 1: periodic structure
- 10: unit structure
- 11: aperture portion
- 11a: constricted portion (cutout portion, slit)
- 20: wave source
- 21: detection surface
- 3: slit ring resonator
- 7: laser
- 70: half mirror
- 71: mirror
- 72, 73, 74, 75: parabolic mirror
- 76: time-delay stage
- 77, 78: photoconductive element
- 80: power supply
- 81: oscillator
- 82: lock-in amplifier
- 83: PC (personal computer)
- 84: amplifier

## Claims

1. A plate-shaped periodic structure comprising:
at least two aperture portions extending through the periodic structure in a direction perpendicular to a main surface of the periodic structure and periodically arranged in at least one direction along the main surface,
wherein each of the aperture portions has a shape that is not mirror-symmetric with respect to an imaginary plane that is a plane perpendicular to the main surface, and
wherein each of the aperture portions includes a constricted portion at which a gap distance of the aperture portion is partially small, the gap distance being a width in a direction parallel to a line of intersection of the main surface and the imaginary plane.

2. The periodic structure according to Claim 1 used in a measurement method, the measurement method including
placing an object on the periodic structure,
irradiating the periodic structure with a linearly polarized electromagnetic wave in a direction perpendicular to the main surface of the periodic structure,
detecting an electromagnetic wave that has been forward scattered or back scattered by the periodic structure, and
measuring a characteristic of an object on the basis of a change that occurs, due to the presence of the object, in a dip waveform generated in a frequency characteristic of the forward scattered electromagnetic wave or in a peak waveform generated in a frequency characteristic of the back scattered electromagnetic wave.

3. The periodic structure according to Claim 1 or 2, wherein the gap distances of parts of the aperture portions on both sides of the constricted portion are each larger than the gap distance of the constricted portion.

4. A measurement method comprising:
placing an object on the periodic structure according to Claim 1;
irradiating the periodic structure with a linearly polarized electromagnetic wave in a direction perpendicular to the main surface of the periodic structure;
detecting an electromagnetic wave that has been forward scattered or back scattered by the periodic structure; and
measuring a characteristic of an object on the basis of a change that occurs, due to the presence of the object, in a dip waveform generated in a frequency characteristic of the forward scattered electromagnetic wave or in a peak waveform generated in a frequency characteristic of the back scattered electromagnetic wave.

5. The measurement method according to Claim 4, further comprising:
a first step of irradiating the periodic structure with a first electromagnetic wave that is polarized in a direction perpendicular to the imaginary plane, and/or
a second step of irradiating the periodic structure with a second electromagnetic wave that is polarized in a direction parallel to the imaginary plane,
wherein a mode of a resonance that occurs in the first step is different from a mode of a resonance that occurs in the second step.

6. The measurement method according to Claim 5, wherein the resonance that occurs in the first step is a TE11-mode-like resonance, and the resonance that occurs in the second step is an LC resonance.

7. The measurement method according to Claim 5 or 6, wherein a width of the constricted portion in the direction parallel to the line of intersection of the main surface and the imaginary plane is adjusted so that a frequency of the dip waveform or the peak waveform based on the resonance that occurs in the second step is 1/10 to 10 times a frequency of the dip waveform or the peak waveform based on the resonance that occurs in the first step.
